# EUROPÄISCHE PATENTANMELDUNG

(11) **EP 4 344 852 A1**
(43) Veröffentlichungstag der Anmeldung: **03.04.2024**
(21) Anmeldenummer: 22199070.8
(22) Anmeldetag: 30.09.2022
(51) Int. Cl.: B29C 49/56, B29C 49/04, B29L 31/00

(54) **VORRICHTUNG ZUM HERSTELLEN VON HOHLKÖRPERN**

(71) Anmelder: BEKUM Maschinenfabriken GmbH, 12277 Berlin (DE)
(72) Erfinder: HENNEMANN, Ullrich, 3133 Traismauer (AT); SCHARNER, Michael, 3133 Traismauer (AT)
(74) Vertreter: SONN Patentanwälte GmbH & Co KG

(57) **Zusammenfassung**

Vorrichtung zum Herstellen von Hohlkörpern aus thermoplastischem Kunststoffmaterial in einem Blasverfahren umfassend eine Hohlform, die zumindest zwei Formteile (2, 2a) aufweist, wobei die Formteile (2, 2a) relativ zueinander bewegbar sind, eine Lagerungsvorrichtung (6), auf welcher zumindest ein Formteil (2) verschieblich gelagert ist, und eine erste Antriebsvorrichtung (7) zum Verschieben des zumindest einen Formteils auf der Lagerungsvorrichtung (6), so dass die beiden Formteile (2, 2a) sich in Verschieberichtung (18) aneinander annähern oder voneinander entfernen, wobei eine zweite Antriebsvorrichtung (7) zur Aufbringung einer im Wesentlichen in Verschieberichtung (18) wirkenden Schließkraft ausgebildet ist.

## Beschreibung

Vorrichtung zum Herstellen von Hohlkörpern aus thermoplastischem Kunststoffmaterial in einem Blasverfahren, umfassend eine Hohlform, die zumindest zwei Formteile aufweist, wobei die Formteile relativ zueinander bewegbar sind, eine Lagerungsvorrichtung, auf welcher zumindest ein Formteil verschieblich gelagert ist, und eine erste Antriebsvorrichtung zum Verschieben des zumindest einen Formteils auf der Lagerungsvorrichtung, so dass die beiden Formteile sich in Verschieberichtung aneinander annähern oder voneinander entfernen.

Vorrichtungen der eingangs angeführten Art, auch Extrusionsblasmaschinen genannt, sind zur Erzeugung eines hohlen Kunststoffartikels durch einen extrudierten und im Kopf geformten Schlauch vorgesehen, welcher zwischen zumindest zwei geschlossenen Formteilen bzw. -hälften unter Druck aufgeblasen wird. Durch anschließendes Abkühlen, Entformen und Abtrennen von Schlauchüberständen entsteht ein fertiger Kunststoffbehälter.

Ein wesentlicher Schritt im Herstellungsprozess ist das Öffnen und Schließen der beiden Formteile, welche den Artikel in seiner Außenkontur abbilden. Die Formteile sind in der Regel auf sogenannten Schließplatten montiert, welche eine lineare Auf-/Zubewegung ermöglichen. Durch den Innendruck von typischerweise 10 bar beim Aufblasen des Kunststoffbehälters in der Form muss mit entsprechendem Gegendruck, welcher mittels Schließmechanismus über die Formteile aufgebracht wird, gegengehalten werden, um ein Öffnen der Form während des Blasvorgangs zu vermeiden. Weiters wird von den Formteilen in der Regel der Anfang bzw. das Ende des Schlauchs durch die Schließkraft abgequetscht. Beim Entformen sind die Formteile so weit voneinander zu entfernen, d.h. zu öffnen, dass der geblasene Artikel vorzugsweise zur Seite zwischen diesen Formteilen entnommen werden kann. Der Öffnungsweg ist in der Regel daher von Formdicke bzw. Artikeldurchmesser abhängig.

Um die Formteile zum Öffnen und Schließen der Vorrichtung zuverlässig bewegen zu können und auch die nötige Schließkraft während eines Blasvorgangs auf die beiden Formteile aufzubringen sind im Stand der Technik unterschiedliche Lösungen bekannt.

Aus der DE 1 814 883 A1 ist eine Extrusionsblasmaschine bekannt, bei welcher ein Antrieb zum Bewegen einer Formhälfte zur Aufbringung der aus dem Blasdruck resultierenden Kräfte vorgesehen ist. Der Antrieb erfolgt über einen hydraulischen Zylinder mit einem Kolben, der mit einem Kniehebel verbunden ist. Ein mittleres Gelenk des Kniehebels ist mit einem vertikal wirkenden Kolben eines horizontal verschiebbaren Zylinders verbunden. Beim Schließen der Formhälften streckt der Antriebskolben den Kniehebel, bis der Kniehebel ausgestreckt ist, wodurch das mittlere Gelenk des Kniehebels auf einer stationären Stütze zu liegen kommt. Durch den Druck des vertikal wirkenden Kolbens wird der Kniehebel in der gestreckten Position gehalten. Somit werden bei geschlossener Form die aus dem Blasdruck resultierenden Kräfte über den Kolben und über den gestreckten Kniehebel auf einen senkrechten Holm eines Rahmens der Vorrichtung übertragen. Zur Entlastung des hydraulischen Kolben-Zylinder-Antriebes ist vorgesehen, dass die Kolben in der Schließstellung der Hohlform verriegelbar sind und die Verriegelungen die aus dem Blasdruck resultierenden Kräfte unmittelbar auf eine als Lagerungsvorrichtung vorgesehenen Rahmen übertragen. Somit ist aus dem Stand der Technik eine Sicherung bzw. Verriegelung von hydraulischen Antriebsvorrichtungen zur Aufnahme der Kräfte während eines Blasvorgangs bekannt. Nachteilig ist aber, dass die Verschiebebewegung und die Kraftaufbringung für den Schließdruck über die gleiche Antriebsvorrichtung erfolgt.

Aus der EP 1 598 165 B1 ist weiters eine Antriebsvorrichtung für Formen zur Herstellung von Behältern, zum Beispiel Flaschen oder Ähnliches aus Kunststoffmaterialien bekannt. Die Vorrichtung weist eine Antriebseinheit auf, die einen Hauptantrieb und einen Hilfsantrieb umfasst, wobei der Hauptantrieb elektrisch und der Hilfsantrieb mechanisch ist. Der Elektromotor betätigt hierbei zwei Schwinghebel, welche Halbschalen mit zwei jeweiligen Armen verbinden, von welchen wenigstens einer aus einem Stellzylinder besteht. Die beiden Arme sind mit einer Seite an eine Gelenkverbindung angelenkt und mit der anderen Seite jeweils an einem Schwinghebel. Die Antriebsvorrichtung ist somit nachteiligerweise zum Verschwenken einer vergleichsweise komplex ausgestalteten Schwinghebelvorrichtung vorgesehen.

Aus der WO 2018/216361 A1 ist weiters eine Formschließmaschine mit einem elektrischen Servomotor bekannt, der ein Paar von beweglichen Platten, an denen Formhälften befestigt sind, mittels einer Kugelumlaufspindel in eine Schließrichtung zum Schließen der Formhälfte bewegt. Die Formschließmaschine weist zudem einen Hydraulikzylinder auf, der an einer der Platten befestigt ist und diese Platte in die Schließrichtung drückt. Wenn ein Abstand der Formhälften ein vorgegebenes Maß erreicht, werden sowohl der elektrische Servomotor als auch der Hydraulikzylinder betätigt. Demnach sind zwei unterschiedliche, parallel wirkende Antriebsvorrichtungen vorgesehen, wodurch ein hoher Energieverbrauch bewirkt wird.

Es ist Aufgabe der vorliegenden Erfindung, zumindest einen der Nachteile des Stands der Technik zu lindern oder zu beheben. Insbesondere ist es eine Aufgabe der Erfindung, eine energieeffiziente Vorrichtung zu schaffen, bei welcher die eingesetzten Antriebsvorrichtungen eine hohe Wirksamkeit aufweisen.

Dies wird erzielt durch eine Vorrichtung der eingangs angeführten Art, bei welcher eine zweite Antriebsvorrichtung zur Aufbringung einer im Wesentlichen in Verschieberichtung wirkenden Schließkraft ausgebildet ist. Der erfindungsgemäßen Lösung liegt die Erkenntnis zugrunde, dass hinsichtlich der Verschiebebewegung der Formteile, um die Entnahme eines im Blasverfahren hergestellten Kunststoffbehälters aus der Form zu ermöglichen, und hinsichtlich der auf die Formteile aufzubringenden Kräfte während des Blasvorgangs, sehr unterschiedliche Anforderungen bestehen. Einerseits ist es vorteilhaft, wenn beim Verschieben des zumindest einen Formteils während der Öffnungs-/Schließbewegung der Formteil mit vergleichsweise hoher Geschwindigkeit bewegt wird, um die Zykluszeit kurz zu halten. Andererseits muss über die Formteile die nötige Schließkraft während des Blasvorgangs aufgebracht werden, die häufig über 500 kN liegt. Mittels einer einzigen Antriebsvorrichtung können diese beiden unterschiedlichen Anforderungen nur in ineffizienter Weise erbracht werden. Bei bekannten hydraulischen Schließsystemen wird hingegen bisher nur ein einziger Hydraulikzylinder für die Schließbewegung als auch Schließkrafterzeugung eingesetzt. Um den nötigen Schließdruck, insbesondere von über 500 kN aufbringen zu können, ist allerdings ein entsprechend großer Kolbendurchmesser erforderlich. Die damit einhergehenden großen Zylinderquerschnitte verursachen jedoch einen hohen Hydraulikölbedarf und damit Energieverbrauch und limitieren die Geschwindigkeit der Öffnungs-/Schließbewegung. Durch die erfindungsgemäß vorgesehene zweite Antriebsvorrichtung, welche zur Aufbringung der im Wesentlichen in Verschieberichtung wirkenden Schließkraft ausgebildet ist, können zwei unterschiedliche Antriebsvorrichtungen für die Erzeugung des Verschiebeweges während der Öffnungs-/Schließbewegung und die Schließkrafterzeugung ausgewählt werden, so dass für die sehr unterschiedlichen Anforderungen jeweils unterschiedliche, effizient arbeitenden Antriebsvorrichtungen eingesetzt werden. Grundsätzlich ist es zum Überführen der Formteile zwischen der Öffnungs-/Schließstellung ausreichend, wenn nur ein einziger Formteil verschieblich gelagert ist. In der Regel wird die Bewegung der zumindest zwei Formteile über eine (im Stand der Technik bekannte) Synchronisationsvorrichtung synchronisiert, so dass die zumindest zwei Formteile während der Öffnungs-/Schließbewegung bewegt werden und während der Schließbewegung die beiden Formteile aneinander angenähert werden und während der Öffnungsbewegung voneinander entfernt werden.

Hinsichtlich einer konstruktiv einfachen Ausgestaltung zum Bewegen des zumindest einen Formteils während der Öffnungs-/Schließbewegung ist es vorteilhaft, wenn ein Kniehebel mit einem ersten und einem zweiten Hebelelement, die über ein Gelenk miteinander verbunden sind, zum Verschieben des zumindest einen Formteils vorgesehen ist.

Wenn die erste Antriebsvorrichtung an einem ortsfest mit der Lagerungsvorrichtung verbundenen Befestigungselement und einem schwenkbar gelagerten ersten Hebelelement des Kniehebels angeordnet ist, kann auf einfache und effiziente Weise eine Kraftübertragung von der ersten Antriebsvorrichtung über den Kniehebel auf den zumindest einen Formteil erfolgen. Vorzugweise greift hierbei ein Kolben der ersten Antriebsvorrichtung an dem Kniehebel an, der beim Ausfahren somit den Kniehebel streckt, wodurch der zumindest eine Formteil an den zweiten Formteil angenähert wird.

Vorteilhafterweise ist als erste Antriebsvorrichtung ein Linearantrieb, insbesondere ein Hydraulikzylinder oder ein elektrischer Antrieb mit einer Kolbenstange, vorgesehen. Die Schließbewegung kann demnach auf effiziente Weise über einen Hydraulikzylinder mit relativ kleinem Durchmesser oder mit einem elektrischen Antrieb wie einem Elektrozylinder (z.B. einer Rollenspindel mit einem Elektroantrieb) erfolgen. Alternativ kann der elektrische Antrieb auch als Drehantrieb mit Getriebe und Kurbel ausgeführt werden. Im Falle einer elektrischen Ausführung kann die Bremsenergie in einen Zwischenkreis zurückgespeist werden, wodurch eine weitere Energieeinsparung erzielbar ist.

Vorzugsweise ist als zweite Antriebsvorrichtung ein Linearantrieb, insbesondere ein Hydraulikzylinder mit einer Kolbenstange, vorgesehen. Die zweite Antriebsvorrichtung, welche zur Schließkrafterzeugung bzw. zur Aufbringung von einem Krafthub vorgesehen ist, weist einen gegenüber der ersten Antriebsvorrichtung deutlich geringeren Hubweg auf. Da aber deutlich größere Kräfte, nämlich die Schließkräfte für die beiden Formteile während des Blasvorgangs, über die zweite Antriebsvorrichtung aufgebracht werden, ist es vorteilhaft, wenn die zweite Antriebsvorrichtung leistungsstärker als die erste Antriebsvorrichtung ist.

Wenn die zweite Antriebsvorrichtung an dem zweiten Hebelelement, vorzugsweise an einem frei auskragenden Ende des zweiten Hebelelements, befestigt ist, wird die zweite Antriebsvorrichtung auf einfache Weise bei einer über die erste Antriebsvorrichtung eingeleiteten Bewegung des zweiten Hebelelements mitbewegt. Somit kann die zweite Antriebsvorrichtung samt dem zumindest einen verschieblich gelagerten Formteil auf einfache Weise an den zweiten Formteil angenähert werden, so dass in einer Endstellung der ersten Antriebsvorrichtung von der zweiten Antriebsvorrichtung nur mehr ein vergleichsweise geringer Hubweg, ein sog. Krafthub, erledigt werden muss, um den zumindest einen Formteil in seine Schließstellung überzuführen.

Vorteilhafterweise sind der zumindest eine verschieblich gelagerte Formteil und die zweite Antriebsvorrichtung auf einem Verschiebeelement befestigt, das auf der Lagerungsvorrichtung verschieblich gelagert ist. Für eine einfache und effiziente Verschiebebewegung des zumindest einen Formteils ist die Anordnung des Formteils auf einem Verschiebeelement, wie z.B. einem Wagen, von Vorteil. Der Wagen ist vorzugsweise bodenseitig gelagert, wobei der Formteil an einem oberen, d.h. der bodenseitigen Auflage, gegenüberliegenden Ende des Wagens vorzugsweise über eine Schließplatte befestigt ist. Das Verschiebeelement, dass insbesondere in der Art eines Wagens ausgebildet ist, kann hierbei in einer Linearführung, insbesondere in Schienenelementen, verschieblich gelagert sein.

Vorzugsweise weist ein als zweite Antriebsvorrichtung vorgesehener Hydraulikzylinder und/oder die Kolbenstange des Hydraulikzylinders seitlich diametral gegenüberliegende Führungslager für ein Verbindungselement zwischen dem Hydraulikzylinder und/oder der Kolbenstange und dem Verschiebeelement auf. Mithilfe dieser Führungslager werden die aus der Schließbewegung verursachten Querkräfte des Kniehebels aufgenommen. Kolbenstange/Hydraulikzylinder erfahren dadurch keine bzw. nur geringe Querkraftbelastungen und Biegebeanspruchungen, wodurch der Verschleiß von Dichtungen, etc. deutlich reduziert wird.

Sofern in einer Schließstellung der zumindest zwei Formteile der Kniehebel in einer geringfügig überstreckten Stellung angeordnet ist, wobei die beiden Hebelelemente in der überstreckten Stellung vorzugsweise einen Winkel zwischen 0,5° und 3°, besonders bevorzugt im Wesentlichen 1°, einschließen, kann der Kniehebel in dieser Stellung auf einfache Weise gesichert werden. Vorzugsweise ist ein Anschlag vorgesehen, an welchem der Kniehebel, insbesondere das erste Hebelelement, in der Schließstellung der zumindest zwei Formteile anliegt. Somit kann der Kniehebel in der Schließstellung der zumindest zwei Formteile und somit während der Einbringung erheblicher Kräfte während des Blasvorgangs in einer im Wesentlichen gestreckten, nämlich geringfügig überstreckten Stellung, gesichert werden.

Vorzugsweise ist die zweite Antriebsvorrichtung zur Verschiebung der zumindest einen Formhälfte um bis 700 mm vorzugsweise bis 500 mm ausgebildet. Demzufolge wird mit der zweiten Antriebsvorrichtung nur ein Verschiebeweg von einigen 100 mm erzielt, z.B. zwischen 200 mm und 400 mm, so dass die zweite Antriebsvorrichtung für einen vergleichsweise kurzen Verschiebeweg und große Kräfteübertragung ausgelegt sein kann. Wenn der Hub mehrere 100 mm beträgt, ist es weiterhin möglich, unterschiedliche Formdicken einsetzen zu können.

Im Gegensatz zur zweiten Antriebsvorrichtung ist die erste Antriebsvorrichtung hingegen dazu ausgelegt den verschieblich gelagerten Formteil stärker zu verlagern, um in der Offenstellung eine seitliche Entnahme des geblasenen Artikels zu ermöglichen. Vorteilhafterweise ist daher die erste Antriebsvorrichtung zur Verschiebung der zumindest einen Formhälfte zwischen 0,7 m und 2 m ausgebildet. Vorteilhafterweise ist die erste Antriebsvorrichtung zur Durchführung eines Verschiebewegs der zumindest einen Formhälfte ausgebildet, der im Wesentlichen dem 2- bis 10-fachen Verschiebeweg, vorzugsweise dem 2- bis 5-fachen Verschiebeweg, entspricht, zur Durchführung dessen die zweite Antriebsvorrichtung ausgebildet ist.

Um sicherzustellen, dass die beiden Formteile auch während des Blasvorgangs zuverlässig geschlossen bleiben, ist es günstig, wenn die zweite Antriebsvorrichtung eine Schließkraft von über 200 kN, vorzugsweise über 500 kN, auf die zumindest zwei Formteile in deren Schließstellung aufbringt.

Die Erfindung wird nachstehend anhand von einem in den Zeichnungen dargestellten bevorzugten Ausführungsbeispiel, auf das sie jedoch keinesfalls beschränkt sein soll, im Detail erläutert.
Fig. 1 zeigt schematisch eine Seitenansicht einer Vorrichtung zum Herstellen von Hohlkörpern aus thermoplastischem Kunststoffmaterial in einem Blasverfahren in einer Offenstellung.
Fig. 2 zeigt schematisch eine Seitenansicht der Vorrichtung gemäß Fig. 1 in einer Schließstellung.
Fig. 3 zeigt schematisch eine Zwischenstellung, in welcher der Kolben einer zweiten Antriebsvorrichtung eingefahren ist.
Fig. 4 zeigt eine Ansicht von oben auf die Verbindung zwischen einer zweiten Antriebsvorrichtung und einem Verbindungselement.
Fig. 5 zeigt einen Schnitt gemäß der Linie V-V in Fig. 4.

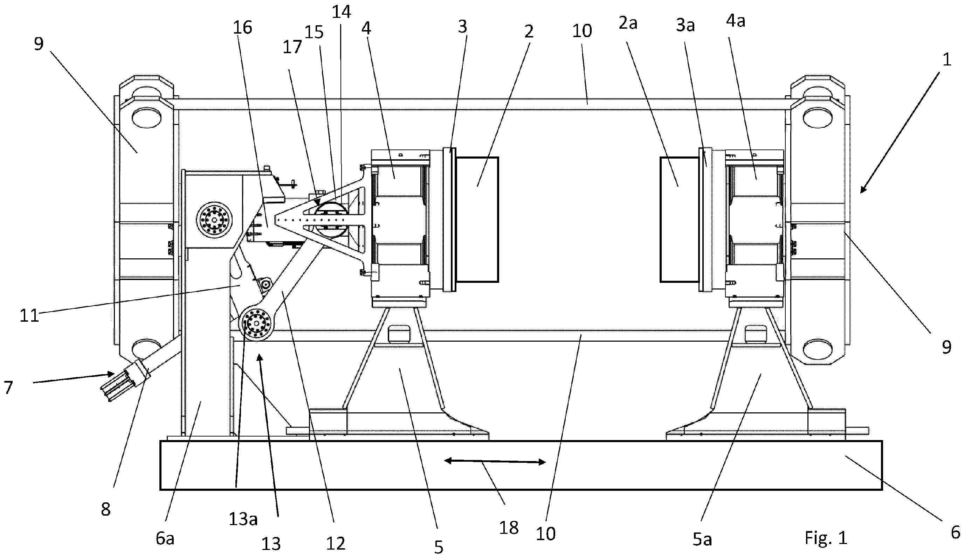

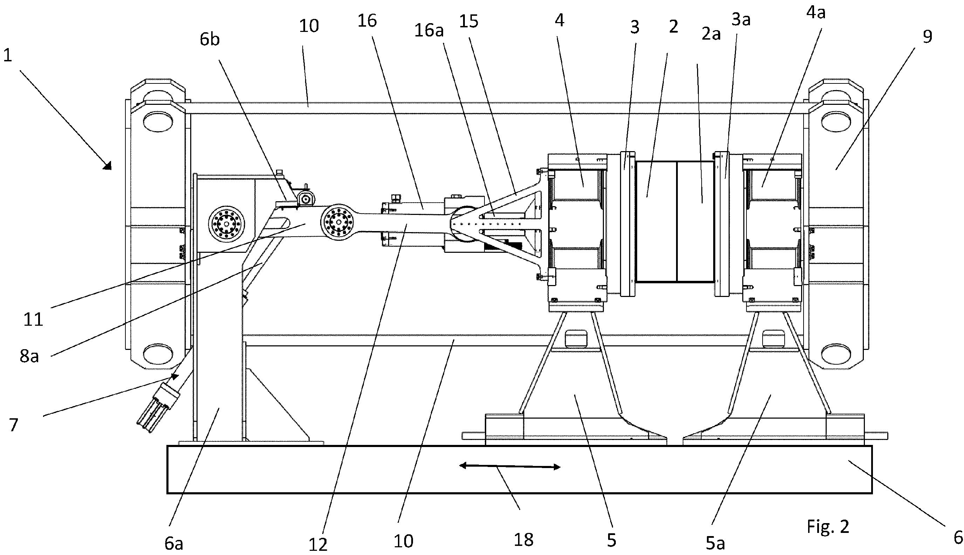

Fig. 1 zeigt schematisch eine Vorrichtung 1 zum Herstellen von Hohlkörpern aus thermoplastischem Kunststoffmaterial in einem Blasverfahren, d.h. eine sogenannte Extrusionsblasmaschine. In der in Fig. 1 gezeigten Stellung befinden sich zwei Formteile bzw. Formhälften 2, 2a in einer Offenstellung. In dieser Offenstellung sind beide Formteile 2, 2a distanziert zueinander angeordnet, wobei im Betrieb der Maschine die beiden Formteile 2, 2a insbesondere zur seitlichen Entnahme eines im Blasverfahren fertiggestellten Kunststoffbehälters in ihre Offenstellung verfahren werden. Um die beiden Formteile 2, 2a auf einfache Weise zwischen einer in Fig. 2 gezeigten Schließstellung, in welcher die beiden Formteile 2, 2a ein Formnest ausbilden, in welchem der herzustellende Artikel geblasen wird, und der in Fig. 1 gezeigten Offenstellung überführen zu können, sind beiden Formteile 2, 2a verschieblich gelagert.

Beide Formteile 2, 2a sind jeweils an einer Schließplatte 3, 3a befestigt, welche wiederum jeweils an einem Kraftverteiler 4, 4a befestigt ist. Die Kraftverteiler 4, 4a sind jeweils auf einer Verschiebevorrichtung 5, 5a angeordnet, welche in der Art eines Wagens auf einer Lagerungsvorrichtung 6, insbesondere einer Grundplatte, bodenseitig aufstehen. Die beiden Verschiebevorrichtungen 5, 5a werden zwischen einer Offen- und Schließstellung verfahren, wobei zwei Antriebsvorrichtung 7, 16 mittelbar auf die Verschiebevorrichtung 5 einwirken, und die Verschiebevorrichtung 5a über eine bekannte Synchronisationsvorrichtung mit der Verschiebvorrichtung 5 verbunden ist, so dass die beiden Formteile 2, 2a bei Betätigung einer Antriebsvorrichtung 7, 16 während einer Schließbewegung aufeinander zubewegt werden oder während einer Öffnungsbewegung voneinander entfernt werden.

Um auf einfache Weise zwischen der Schließstellung und der Offenstellung verfahren zu können, ist der auf der Verschiebevorrichtung 5 befestigte Formteil 2 verschieblich gelagert und kann über eine erste Antriebsvorrichtung 7 auf der Lagerungsvorrichtung 6 verschoben werden. Die erste Antriebsvorrichtung 7, genauer gesagt ein Zylinder 8 der Antriebsvorrichtung 7, ist auf einem Befestigungselement bzw. Steher 6a, der auf der Grundplatte 6, angeordnet ist, befestigt. An der Rückseite, d.h. einer der verschieblichen Formhälfte abgewandten Seite des Befestigungselements 6a ist ein Biegeträger 9 befestigt, der über Zugstangen 10, mit einem weiteren Biegeträger 9a, der an der Rückseite des Kraftverteilers 4a angeordnet ist, verbunden ist.

Ein Kolben 8a der Antriebsvorrichtung ist mit einem ersten Hebelelement 11 eines Kniehebels 13, der zwei Hebelelemente 11, 12 aufweist, verbunden. Das erste Hebelelement 11 ist verschwenkbar am Befestigungselement 6a gelagert. Das Hebelelement 12 ist einerseits über ein Drehlager 13a mit dem ersten Hebelelement 11 schwenkbar verbunden und andererseits über ein weiteres Lager 14 mit einem Verbindungselement 15 verbunden, der an dem Kraftverteiler 4 befestigt ist.

Das Verbindungselement 15 ist insbesondere zur Verbindung zwischen einer zweiten Antriebsvorrichtung 16 und dem Kraftverteiler 4 und somit mittelbar der verschieblich gelagerten Formhälfte 2 vorgesehen. Eine Kolbenstange 16a des als zweite Antriebsvorrichtung vorgesehenen Hydraulikzylinders weist dabei seitlich diametral gegenüberliegende Führungslager 17 für das Verbindungselement 15 auf, um nach Möglichkeit keine Querkräfte auf den Hydraulikzylinder durchzuleiten und somit insbesondere Dichtungen der zweiten Antriebsvorrichtung 16 zu schonen.

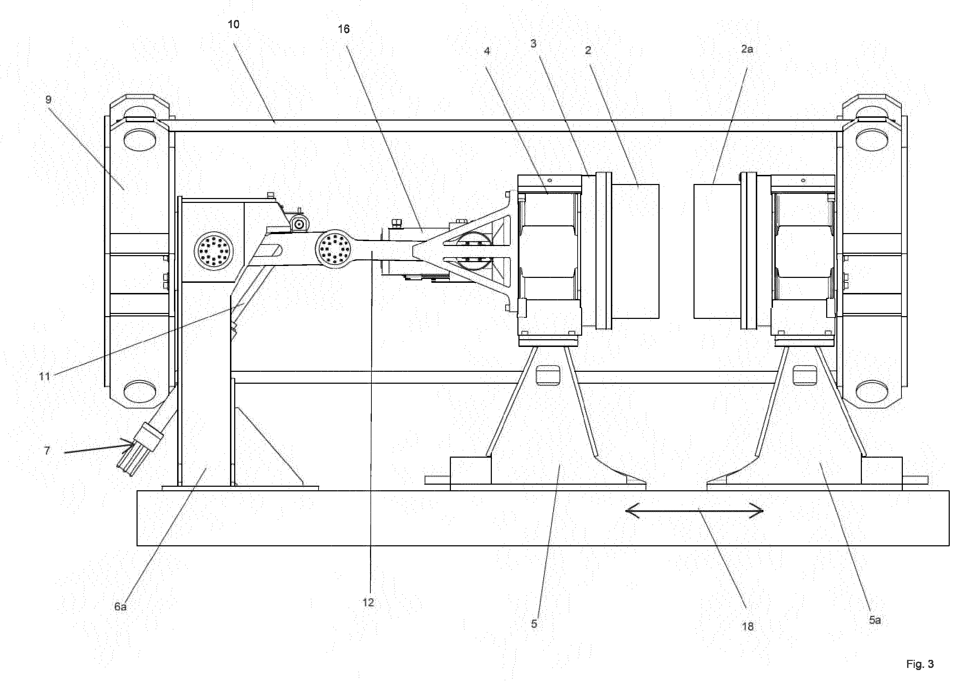

Um die verschieblich gelagerten Formteile 2, 2a von der in Fig. 1 gezeigten Offenstellung in die in Fig. 2 gezeigte Schließstellung überzuführen, verfährt zunächst der Kolben 8a in seine ausgefahrene Stellung; sodann sind die Formhälften 2, 2a in einer gegenüber Offenstellung angenäherten Zwischenstellung, wie in Fig. 3 ersichtlich, angeordnet Dadurch wird der Kniehebel 13 in eine im Wesentlichen gestreckte Stellung überführt und die beiden verschieblich gelagerten Formteile 2, 2a werden aneinander herangefahren. Bei dem gezeigten Ausführungsbeispiel wird der Kniehebel 13 in eine leicht überstreckte Stellung verfahren, so dass die beiden Hebelelemente einen Winkel von ca. 1° einschließen. In dieser leicht überstreckten Stellung schlägt das Hebelelement 11 an einem oberen Anschlag 6b des Befestigungselements 6a an, so dass die erste Antriebsvorrichtung 7 während des Blasvorgangs den Kniehebel nicht aktiv in der leicht überstreckten Stellung halten muss.

Nachdem durch Aktivierung der ersten Antriebsvorrichtung 7 die Verschiebevorrichtungen 5, 5a samt den Formteilen 2, 2a auf der Lagerungsvorrichtung verschoben wurden und somit ein Großteil der Schließbewegung in Verschieberichtung 18 mit einer vergleichsweise leistungsschwachen, aber schnellen Antriebsvorrichtung durchgeführt wurde, d.h. ein sogenannter Eilhub vollzogen wurde, wird die zweite Antriebsvorrichtung 16 aktiviert, um die Formhälften von der in Fig. 3 gezeigten Zwischenstellung in die in Fig. 2 gezeigte Schließstellung überzuführen. Mit dieser deutlich leistungsstärkeren Antriebsvorrichtung 16 wird ein geringerer Verschiebeweg der Formhälfte 2, vorzugsweise von ca. 200 mm bis 400 mm, ein sogenannter Krafthub, erzielt. Mit der leistungsstärkeren zweiten Antriebsvorrichtung 16 wird somit eine Schließkraft von vorzugsweise über 500 kN zwischen den beiden Formhälften 2, 2a erzeugt.

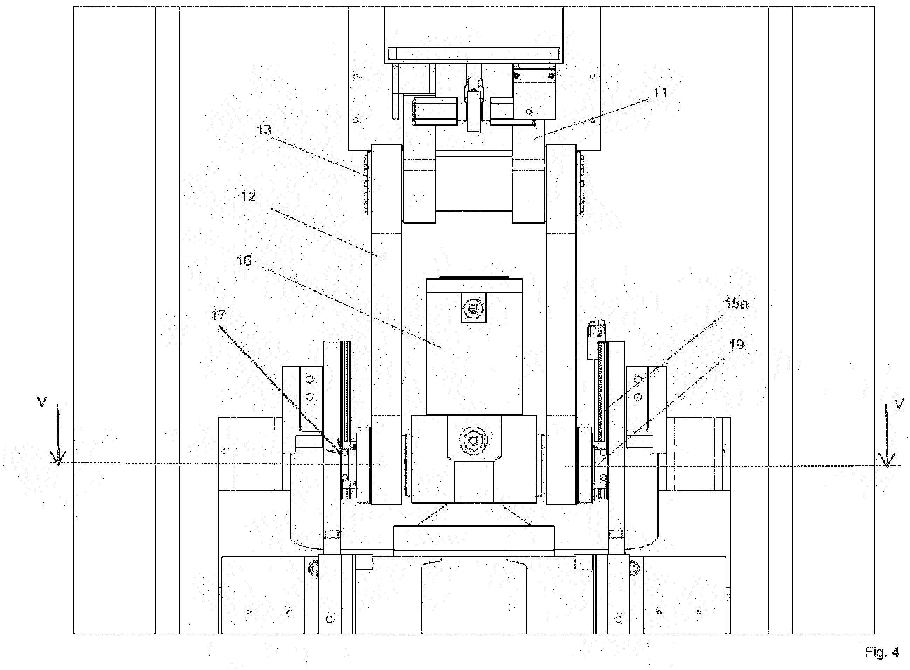

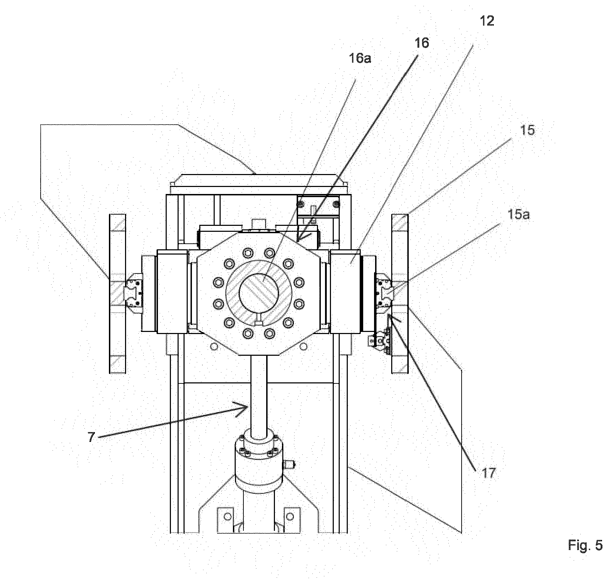

In den Fig. 4 und 5 ist im Detail die Verbindung zwischen der zweiten Antriebsvorrichtung 16 und einem Verbindungselement 15 zum Kraftverteiler 4, welcher die Schließplatte 3 trägt, ersichtlich.

Im Verbindungsabschnitt zwischen dem als zweite Antriebsvorrichtung 16 vorgesehenen Zylinder, dem sog. Krafthubzylinder, und dem Hebelelement 12 ist an gegenüberliegenden Außenseiten jeweils ein Führungslager 17 vorgesehen. Das Führungslager 17 weist vorzugsweise jeweils einen Rollwagen 19 auf, in welchem eine Führungsschiene 15a des Verbindungselements 15 verschieblich gelagert ist, welche den als zweite Antriebsvorrichtung 16 vorgesehen Zylinder führen. Dadurch werden die durch den Kniehebel 13 verursachten Querkräfte aus der Schließbewegung aufgenommen und in das Verschiebeelement 5 abgeleitet, so dass das Hebelelement 12 und die Antriebsvorrichtung 16 im Wesentlichen keine Querkraftbelastungen und Biegebeanspruchungen erfahren, wodurch insbesondere der Verschleiß von Dichtungen verringert wird.

Über die beiden Antriebsvorrichtungen 7 und 16, welche sehr unterschiedlichen Anforderungen genügen, wird somit ein schnelles und energieeffizientes Öffnen und Schließen der beiden Formteile 2, 2a erzielt. Bei dem gezeigten Ausführungsbeispiel ist als erste Antriebsvorrichtung 7 vorzugsweise ein Elektrozylinder, der eine Rollenspindel mit einem Elektroantrieb aufweist, vorgesehen. Alternativ kann der elektrische Antrieb auch als Drehantrieb mit Getriebe und Kurbel ausgeführt werden. Alternativ ist aber auch möglich, dass ein Hydraulikzylinder als erste Antriebsvorrichtung 7 vorgesehen ist, wobei in diesem Fall der Hydraulikzylinder der ersten Antriebsvorrichtung 7 einen deutlich kleineren Durchmesser als ein als zweite Antriebsvorrichtung 16 vorgesehener Hydraulikzylinder aufweist.

## Patentansprüche

1. Vorrichtung zum Herstellen von Hohlkörpern aus thermoplastischem Kunststoffmaterial in einem Blasverfahren umfassend
eine Hohlform, die zumindest zwei Formteile (2, 2a) aufweist, wobei die Formteile (2, 2a) relativ zueinander bewegbar sind,
eine Lagerungsvorrichtung (6), auf welcher zumindest ein Formteil (2) verschieblich gelagert ist, und
eine erste Antriebsvorrichtung (7) zum Verschieben des zumindest einen Formteils auf der Lagerungsvorrichtung (6), so dass die beiden Formteile (2, 2a) sich in Verschieberichtung (18) aneinander annähern oder voneinander entfernen, **dadurch gekennzeichnet, dass**
eine zweite Antriebsvorrichtung (16) zur Aufbringung einer im Wesentlichen in Verschieberichtung (18) wirkenden Schließkraft ausgebildet ist.

2. Vorrichtung nach Anspruch 1, **dadurch gekennzeichnet, dass** ein Kniehebel (13) mit einem ersten und einem zweiten Hebelelement (12), die über ein Gelenk miteinander verbunden sind, zum Verschieben des zumindest einen Formteils (2) vorgesehen ist.

3. Vorrichtung nach Anspruch 2, **dadurch gekennzeichnet, dass** die erste Antriebsvorrichtung (7) an einem ortsfest mit der Lagerungsvorrichtung (6) verbundenen Befestigungselement (6a) und einem schwenkbar gelagerten ersten Hebelelement (12) des Kniehebels (13) angeordnet ist.

4. Vorrichtung nach einem der Ansprüche 1 bis 3, **dadurch gekennzeichnet, dass** als erste Antriebsvorrichtung (7) ein Linearantrieb, insbesondere ein Hydraulikzylinder oder elektrischer Antrieb mit einer Kolbenstange (8), oder ein Drehantrieb vorgesehen ist.

5. Vorrichtung nach einem der Ansprüche 1 bis 3, **dadurch gekennzeichnet, dass** als zweite Antriebsvorrichtung (16) ein Linearantrieb, insbesondere ein Hydraulikzylinder mit einer Kolbenstange (16a), vorgesehen ist, wobei vorzugsweise die zweite Antriebsvorrichtung (16) leistungsstärker als die erste Antriebsvorrichtung (7) ist.

6. Vorrichtung nach einem der Ansprüche 3 bis 5, **dadurch gekennzeichnet, dass** die zweite Antriebsvorrichtung (16) an dem zweiten Hebelelement (12), vorzugsweise an einem frei auskragenden Ende des zweiten Hebelelements (12), befestigt ist.

7. Vorrichtung nach einem der Ansprüche 1 bis 6, **dadurch gekennzeichnet, dass** der zumindest eine verschieblich gelagerte Formteil (2) und die zweite Antriebsvorrichtung (16) auf einem Verschiebeelement (5) befestigt sind, das auf der Lagerungsvorrichtung (6) verschieblich gelagert ist.

8. Vorrichtung nach Anspruch 7, **dadurch gekennzeichnet, dass** ein als zweite Antriebsvorrichtung (16) vorgesehener Hydraulikzylinder und/oder die Kolbenstange (16a) des Hydraulikzylinders seitlich diametral gegenüberliegende Führungslager für ein Verbindungselement (15) zwischen dem Hydraulikzylinder und/oder der Kolbenstange (16a) und dem Verschiebeelement aufweist.

9. Vorrichtung nach einem der Ansprüche 1 bis 8, **dadurch gekennzeichnet, dass** in einer Schließstellung der zumindest zwei Formteile (2, 2a) der Kniehebel (13) in einer geringfügig überstreckten Stellung angeordnet ist, wobei die beiden Hebelelemente (12) in der überstreckten Stellung vorzugsweise einen Winkel zwischen 0,5 und 3° einschließen.

10. Vorrichtung nach Anspruch 9, **dadurch gekennzeichnet, dass** ein Anschlag vorgesehen ist, an welchem der Kniehebel (13), vorzugsweise das erste Hebelelement (12), in der Schließstellung der zumindest zwei Formteile (2, 2a) anliegt.

11. Vorrichtung nach einem der Ansprüche 1 bis 10, **dadurch gekennzeichnet, dass** die zweite Antriebsvorrichtung (16) zur Verschiebung der zumindest einen Formhälfte (2) um bis 700 mm vorzugsweise bis 500 mm, besonders bevorzugt zwischen 200 und 400 mm, ausgebildet ist.

12. Vorrichtung nach einem der Ansprüche 1 bis 11, **dadurch gekennzeichnet, dass** die erste Antriebsvorrichtung (7) zur Verschiebung des zumindest einen Formteils zwischen 0,7 m und 2 m ausgebildet ist.

13. Vorrichtung nach einem der Ansprüche 1 bis 12, **dadurch gekennzeichnet, dass** die erste Antriebsvorrichtung (7) zur Durchführung eines Verschiebewegs der zumindest einen Formhälfte (2) ausgebildet ist, der im Wesentlichen dem 2- bis 10-fachen Verschiebeweg, vorzugsweise dem 2- bis 5-fachen Verschiebeweg, entspricht, zur Durchführung dessen die zweite Antriebsvorrichtung (16) ausgebildet ist.

14. Vorrichtung nach einem der Ansprüche 1 bis 13, **dadurch gekennzeichnet, dass** die zweite Antriebsvorrichtung (16) eine Schließkraft von über 200 kN, vorzugsweise über 500 kN, auf die zumindest zwei Formteile (2a) in deren Schließstellung aufbringt.
